# EUROPEAN PATENT SPECIFICATION

(11) **EP 3 475 139 B1**
(45) Date of publication and mention of the grant of the patent: **25.12.2019**
(21) Application number: 17732122.1
(22) Date of filing: 22.06.2017
(51) Int. Cl.: B61D 17/12

(54) **METHOD OF ASSEMBLING A CEILING FRAMEWORK TO A ROOF STRUCTURE OF A VEHICLE BODY OF A RAIL VEHICLE**
VERFAHREN ZUR MONTAGE EINES DECKENRAHMENS AN EINER DACHSTRUKTUR EINER FAHRZEUGKAROSSERIE EINES SCHIENENFAHRZEUGS
PROCÉDÉ D'ASSEMBLAGE D'UNE OSSATURE DE PLAFOND À UNE STRUCTURE DE TOIT D'UNE CARROSSERIE D'UN VÉHICULE FERROVIAIRE

(30) Priority: 24.06.2016 GB 201611036
(43) Date of publication of application: 01.05.2019
(73) Proprietor: Bombardier Transportation GmbH, 10785 Berlin (DE)
(72) Inventor: GIBLING, Scott, IIkeston Derbyshire DE 7 6GW (GB); GLOVER, Paul, Leicester Leicestershire LE7 7UB (GB)
(74) Representative: Alatis
(86) International application number: PCT/EP2017/065456
(87) International publication number: WO 2017/220745

(56) References cited:
- EP-A1- 2 301 820
- WO-A1-2016/072043
- DE-A1-102009 031 599
- DE-A1-102014 214 581
- GB-A- 2 441 153

## Description

### TECHNICAL FIELD OF THE INVENTION

The present invention relates to a method of assembling a ceiling framework to a roof structure of a vehicle body of a rail vehicle.

### BACKGROUND ART

The ceiling structure of a rail vehicle is usually directly assembled to the roof structure of the vehicle body. Prior art document GB 2 441 153 A gives an example of a known method, whereby a ceiling module is assembled to the interior roof of a vehicle by clamping. It then proves difficult to ensure a precise positioning, due to the large scale of the parts that are to be fixed together and to the manufacturing tolerances of each of these parts. As a result, the ceiling structure may be too low, which may cause a number of issues e.g. for fixing interior partitions.

### SUMMARY OF THE INVENTION

The invention aims to provide improved method of assembling a ceiling structure to a roof structure of a vehicle body.

According to a first aspect of the invention, there is provided a method of assembling a ceiling framework to a roof structure of a vehicle body of a rail vehicle, which comprises the following:
- assembling a ceiling framework of the vehicle body;
- positioning a roof structure of the vehicle body upside down onto a roof jig, the roof jig being provided with a set of roof positioning elements co-operating with corresponding elements of the roof structure for restraining the roof structure in a unique predetermined position relative to the roof jig, the roof jig having a set of additional positioning elements;
- positioning the ceiling framework upside down underneath a movable ceiling jig, the ceiling jig being provided with a set of ceiling positioning elements co-operating with corresponding elements of the ceiling framework for restraining the ceiling framework in a unique predetermined position relative to the ceiling jig, the ceiling jig having a set of additional positioning elements;

- lowering the ceiling jig together with the ceiling framework onto the roof jig and roof structure, such that the additional positioning elements of the ceiling jig and the additional positioning elements of the roof jig coincide;
- fixing the ceiling framework to the roof structure; and
- releasing the ceiling jig from the ceiling framework and removing the ceiling jig.

The co-operation of the ceiling jig with the roof jig makes it possible to obtain a precise positioning of the ceiling framework relative to the roof structure during the assembly process and until the ceiling framework is fixed to the roof structure.

According to a preferred embodiment, the corresponding elements of the roof structure include through holes located at various positions along both sides of the roof structure, the method further comprising a subsequent step of assembling the roof structure to a side wall structure of the vehicle body, wherein the through holes receive fixings such as bolts or rivets for permanently fixing the side wall structure to the roof structure. In other words, the holes that are used as datum for positioning the roof structure to the roof jig are also later used as datum for positioning the roof structure relative to the side wall structures of the vehicle body. As a result, an accurate positioning of the ceiling framework relative to the other elements of the structure of the vehicle body, such as the side walls and floor structures, is obtained.

The roof positioning elements can be integral with the roof structure or releasable, but their position must be accurately determined. According to one embodiment, the roof positioning elements include pins or bolts extending obliquely.

Advantageously, fixing the ceiling framework to the roof structure may comprise fitting and fixing adjustable brackets to the ceiling framework and roof structure.

According to one embodiment, the additional positioning elements of the roof jig and ceiling jig include vertical pins and cavities. The additional positioning elements are preferably self-centring, i.e. they contribute to guiding the ceiling jig when the latter is lowered onto the roof jig.

The method can be reliably applied to ceiling frameworks of great length, e.g. more than 6 or 7 metres long. According to one embodiment, the ceiling framework has a length, which is more than 1/4^{th} and preferably more than 1/3^{rd} of the length of the roof structure.

According to one embodiment, assembling the ceiling framework includes assembling longitudinal and transverse beams. The ceiling framework may comprise provisions for low and high ceiling parts.

According to one embodiment, the method further comprises providing the ceiling framework with pieces of interior equipment before positioning the ceiling framework upside down underneath a movable ceiling jig. Such pieces of equipment may include grab rails, housings for various units such as display or HVAC units.

According to one embodiment, the method further comprises covering the ceiling framework with ceiling panels after the ceiling jig has been removed. The ceiling panels, if they were installed before the ceiling framework is fixed to the ceiling jig, would render the subsequent operations more difficult.

According to another aspect of the invention, there is provided a method of assembling a ceiling framework to a roof structure of a vehicle body of a rail vehicle, comprising:
- assembling the ceiling framework of the vehicle body;
- accurately positioning the roof structure of the vehicle body upside down onto a roof jig,
- accurately positioning the ceiling framework upside down underneath a movable ceiling jig,
- controllably lowering the ceiling jig together with the ceiling framework onto the roof jig and roof structure, such that the ceiling jig is accurately positioned onto the roof jig;
- fixing the ceiling framework to the roof structure; and
- releasing the ceiling jig from the ceiling framework and removing the ceiling jig.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- Figure 1 is an isometric view of a ceiling framework;
- Figure 2 is a detail of the ceiling framework;
- Figure 3 is an illustration of the ceiling framework of figure 1 being temporarily fixed to a ceiling jig;
- Figure 4 illustrates a roof structure of a rail vehicle body, temporarily fixed to a roof jig;
- Figure 5 illustrates the ceiling framework and jig being lowered onto the roof structure;
- Figure 6 illustrates the ceiling framework being fixed to the roof structure;
- Figure 7 is a detail illustrates a bracket used for fixing the ceiling framework to the roof structure.

Corresponding reference numerals refer to the same or corresponding parts in each of the figures.

### DETAILED DESCRIPTION OF A PREFERRED EMBODIMENT

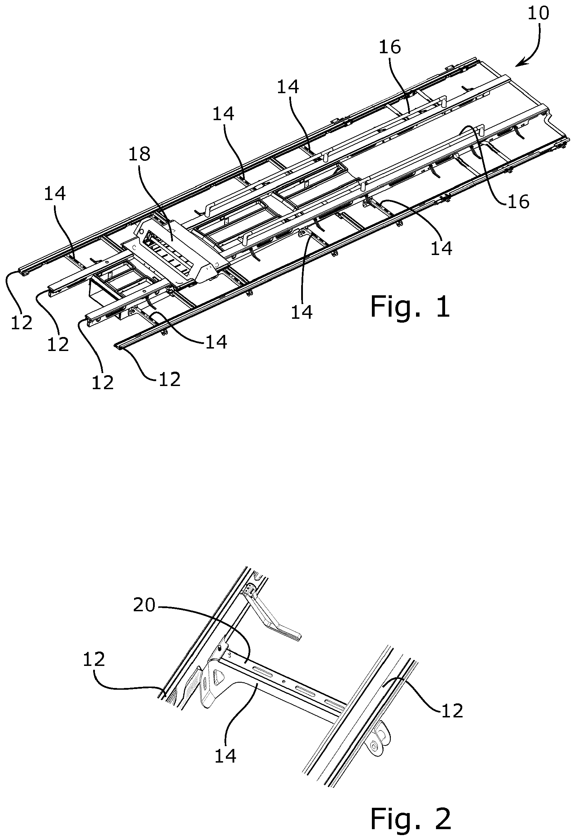

With reference to Figure **1****,** a ceiling framework **10** of a rail vehicle comprises a set of parallel longitudinal beams **12** and transverse outriggers **14** fixed together to provide a rigid structure. The ceiling framework **10** is shown upside down, with some interior fittings such as grab rails **16** and a display housing **18.** The overall length of the ceiling framework **10** is about 1/3^{rd} of the length of a vehicle body for which it is intended.

Figure **2** shows a detail of an outrigger **14** of the ceiling framework **10,** which is fixed at its ends to two longitudinal beams **12** and is provided with slots **20** extending in the transverse direction.

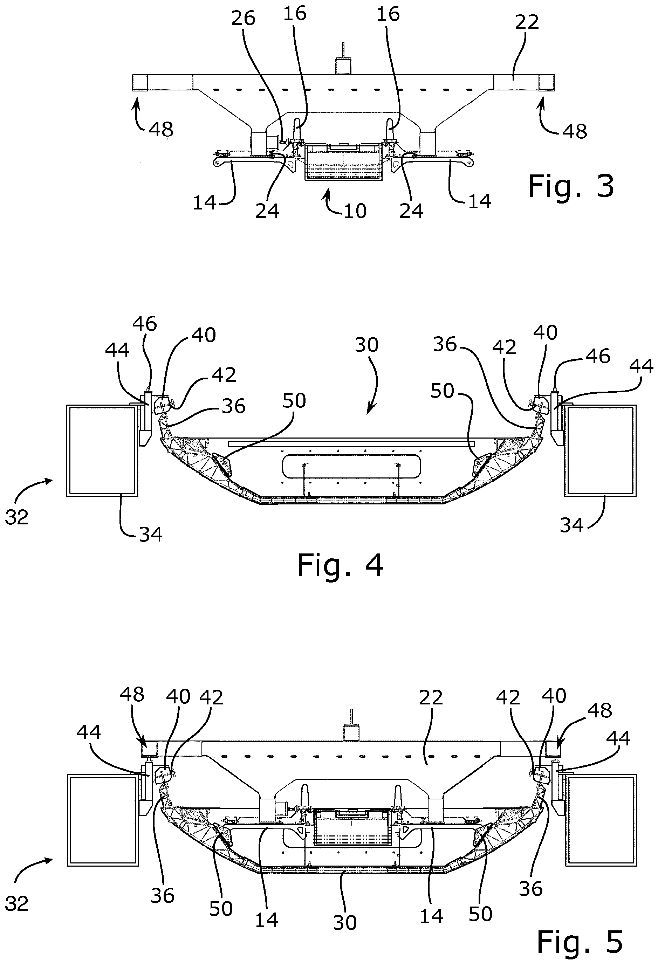

The ceiling framework **10** is temporarily fixed to a ceiling jig **22,** as illustrated in figure **3****.** More specifically, bolts **24** are inserted in at least four of the slots **20** to precisely position the ceiling framework **10** relative to the ceiling jig **22** in the longitudinal and vertical directions. The ceiling jig **22** is provided with a couple of stops **26** against which the ceiling framework **10** is located before the bolts **24** are tightened. At this stage, an accurate and repeatable positioning of the ceiling framework **10** relative to the ceiling jig **22** has been obtained.

Figure **4** illustrates a cross-section of a roof structure **30** of a vehicle body of a rail vehicle, positioned into a pivotable rectangular roof jig **32.** In the cross-section of figure **4****,** only the two longitudinal rectangular box-shaped beams **34** of the roof jig **32** are shown. These two longitudinal beams **34** are rigidly fixed to one another by two transverse beams located at both ends of the roof jig **32** to form the rectangular structure. The transverse beams are supported each on a horizontal pivot preferably located centrally at mid distance of the longitudinal beams **34,** so as to allow a pivoting movement of the roof jig **32** about a longitudinal pivot axis parallel to the longitudinal beams **34.**

The roof structure **30** is positioned upside down and includes side plates **36** (see figure **5**) for fixing the roof structure to the side walls of the vehicle body. More precisely, the side plates **36** are provided with holes **38** in which rivets or bolts are inserted when the roof structure **30** and side wall structure are fixed to one another. However, before the side wall structure is fixed to the roof structure **30,** some of the holes **38** are used as datum for accurately defining the position of the roof structure **30** relative to the roof jig **32.** The roof jig **32** is provided with a set of fixation brackets **40** facing the holes **38** and bolts **42** are inserted into the holes **38** and brackets **42** to fix the roof structure **30** to the roof jig **32** as illustrated in figure **4****.** The orientation of the holes **38** and brackets is preferably such that the bolts are inclined. The roof structure **30** is preferably supported by the bolts **42,** i.e. it is preferably slightly above ground level and does not rest on the ground. An accurate and repeatable positioning of the roof structure **30** relative to the roof jig **32** is obtained.

The roof jig **30** is provided with vertical pillars **44** and vertical positioning pins **46** protruding on top of the vertical pillars **44.** The ceiling jig **22** is provided with corresponding positioning cavities **48.**

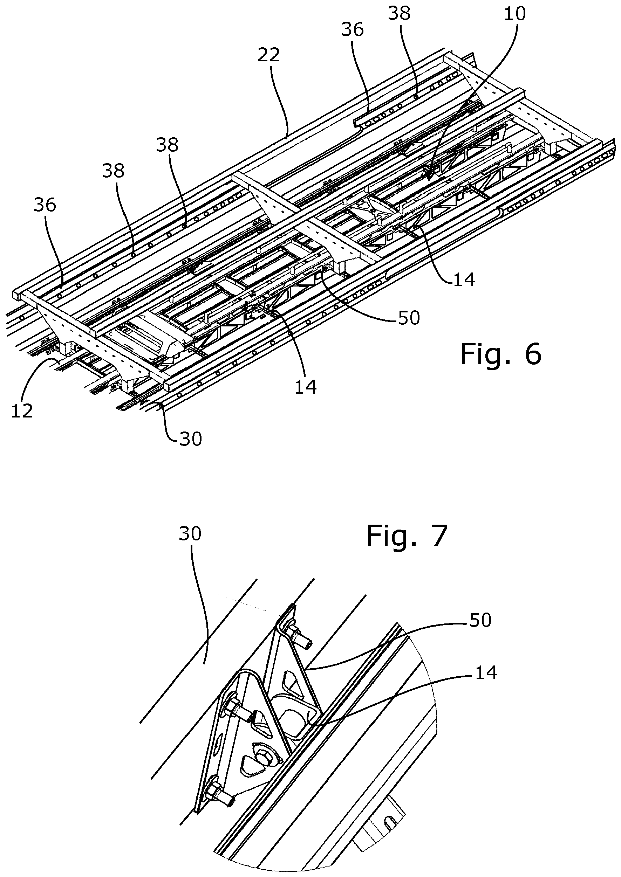

A crane is used to lift the ceiling jig **22** and the ceiling framework 10 and lower it onto the roof jig **32** and roof structure **30** until the positioning pins **46** of the roof jig **32** enter the corresponding positioning cavities **48** of the ceiling jig **22,** in the position illustrated in figures **5** and **6****.** As the ceiling jig **22** and roof jig **32** are extremely stiff, the position of the ceiling framework **10** with respect to the roof structure **30** is determined with great accuracy and repeatability.

The roof structure **30** is provided with adjustable brackets **50,** shown in detail in figure **7****.** The position of each bracket **50** is adjusted and the brackets are bolted to the outriggers **14** and to the roof structure **30,** before the ceiling jig **22** is released from the ceiling framework **10** and removed.

As a result of this operation, the ceiling framework has been reliably and accurately fixed to the roof structure.

As the complete sealing structure is composed of two or three separate ceiling frameworks **10,** the assembly operations are repeated for each ceiling framework **10.**

Subsequent assembly operations may include the installation of components such as HVAC units, display screen, wiring and of ceiling panels, either in the upside-down position or in another position, e.g. after pivoting the roof structure by 90° or 180°. They also include the assembly of the other components of the vehicle body structure, i.e. the side wall structures and the floor and underframe structure. As mentioned before, the holes are used for fixing the roof structure to the side walls of the vehicle body.

## Claims

1. A method of assembling a ceiling framework (10) to a roof structure (30) of a vehicle body of a rail vehicle, **characterised in that** it comprises the following:
- assembling a ceiling framework (10) of the vehicle body;
- positioning a roof structure (30) of the vehicle body upside down onto a roof jig (32), the roof jig (32) being provided with a set of roof positioning elements (40) co-operating with corresponding elements (36, 38) of the roof structure (30) for restraining the roof structure (30) in a unique predetermined position relative to the roof jig (32), the roof jig (32) having a set of additional positioning elements (46) ;
- positioning the ceiling framework (10) upside down underneath a movable ceiling jig (22), the ceiling jig (22) being provided with a set of ceiling positioning elements (26, 24) co-operating with corresponding elements (14, 20) of the ceiling framework (10) for restraining the ceiling framework (10) in a unique predetermined position relative to the ceiling jig (22), the ceiling jig (22) having a set of additional positioning elements (48);
- lowering the ceiling jig (22) together with the ceiling framework (10) onto the roof jig (32) and roof structure (30), such that the additional positioning elements (48) of the ceiling jig (22) and the additional positioning elements (46) of the roof jig (32) coincide;
- fixing the ceiling framework (10) to the roof structure (30); and
- releasing the ceiling jig (22) from the ceiling framework (30) and removing the ceiling jig (22).

2. The method of claim 1, wherein the corresponding elements (36, 38) of the roof structure (30) is provided with through holes (38) located at various positions along both sides of the roof structure (30), the method further comprising a subsequent step of assembling the roof structure (30) to a side wall structure of the vehicle body, wherein the through holes (38) receive fixings for permanently fixing the side wall structure to the roof structure (30).

3. The method of any one of the preceding claims, wherein the roof positioning elements (42) comprise pins or bolts extending obliquely.

4. The method of any one of the preceding claims, wherein fixing the ceiling framework (10) to the roof structure (30) comprises fitting and fixing adjustable brackets (50) to the ceiling framework (10) and roof structure (30).

5. The method of any one of the preceding claims, wherein the additional positioning elements (46) of the roof jig (32) and ceiling jig (22) comprise vertical pins (46) and cavities (48).

6. The method of any one of the preceding claims, wherein the ceiling framework (10) has a length, which is more than 1/4^{th} of the length of the roof structure (30).

7. The method of any one of the preceding claims, wherein the ceiling framework (10) has a length, which is more than 1/3^{rd} of the length of the roof structure (30).

8. The method of any one of the preceding claims, wherein assembling the ceiling framework (10) comprises assembling longitudinal and transverse beams (12, 14).

9. The method of any one of the preceding claims, further comprising providing the ceiling framework with pieces of interior equipment (16, 18) before positioning the ceiling framework (10) upside down underneath the movable ceiling jig (22).

10. The method of any one of the preceding claims, further comprising covering the ceiling framework with ceiling panels after the ceiling jig (22) has been removed.

## Patentansprüche

1. Verfahren zum Zusammenbau eines Deckengerüsts (10) an einer Dachstruktur (30) eines Fahrzeugkörpers eines Schienenfahrzeugs, **dadurch gekennzeichnet, dass** es Folgendes umfasst:
- Zusammenbau eines Deckengerüsts (10) des Fahrzeugkörpers;
- Positionieren einer auf dem Kopf stehender Dachstruktur (30) des Fahrzeugkörpers auf einer Dach-Spannvorrichtung (32), wobei die Dach-Spannvorrichtung (32) mit einem Satz von Dach-Positionierungselementen (40) bereitgestellt ist, die mit entsprechenden Elementen (36, 38) der Dachstruktur (30) zum Einspannen der Dachstruktur (30) in einer einzigartigen vorbestimmten Position in Bezug auf die Dach-Spannvorrichtung (32) zusammenwirkt, wobei die Dach-Spannvorrichtung (32) einen Satz von zusätzlichen Positionierungselementen (46) aufweist;
- Positionieren des auf dem Kopf stehenden Deckengerüsts (10) unterhalb einer beweglichen Dach-Spannvorrichtung (22), wobei die Dach-Spannvorrichtung (22) mit einem Satz von Decken-Positionierungselementen (24, 26) bereitgestellt ist, die mit entsprechenden Elementen (14, 20) der Deckenstruktur (10) zum Einspannen des Deckengerüsts (10) in einer einzigartigen vorbestimmten Position in Bezug auf die Decken-Spannvorrichtung (22) zusammenwirkt, wobei die Decken-Spannvorrichtung (22) einen Satz von zusätzlichen Positionierungselementen (48) aufweist;
- Absenken der Decken-Spannvorrichtung (22) zusammen mit dem Deckengerüst (10) auf die Dach-Spannvorrichtung (32) und die Dachstruktur (30) derart, dass die zusätzlichen Positionierungselemente (48) der Decken-Spannvorrichtung (22) und die zusätzlichen Positionierungselemente (46) der Dach-Spannvorrichtung (32) sich decken;
- Befestigen des Deckengerüsts (10) an der Dachstruktur (30); und
- Freisetzen der Decken-Spannvorrichtung (22) von dem Deckengerüst (30) und Entfernen der Decken-Spannvorrichtung (22).

2. Verfahren gemäß Anspruch 1, wobei die entsprechenden Elemente (36, 38) der Dachstruktur (30) mit Durchgangsbohrungen (38) bereitgestellt sind, die an verschiedenen Positionen entlang beiden Seiten der Dachstruktur (30) angeordnet sind, wobei das Verfahren weiterhin einen nachfolgenden Schritt zum Zusammenbauen der Dachstruktur (30) an einer Seitenwandstruktur des Fahrzeugkörpers umfasst, wobei die Durchgangsbohrungen (38) Befestigungen zum dauerhaften Befestigen der Seitenwandstruktur an der Dachstruktur (30) aufnehmen.

3. Verfahren gemäß irgendeinem der voranstehenden Ansprüche, wobei die Dachpositionierungselemente (42) Stifte oder Bolzen umfassen, die sich schräg erstrecken.

4. Verfahren gemäß irgendeinem der voranstehenden Ansprüche, wobei das Befestigen des Deckengerüsts (10) an der Dachstruktur (30) das Einpassen und Befestigen von anpassbaren Klammern (50) an dem Deckengerüst (10) und der Dachstruktur (30) umfasst.

5. Verfahren gemäß irgendeinem der voranstehenden Ansprüche, wobei die zusätzlichen Positionierungselemente (46) der Dach-Spannvorrichtung (32) und der Decken-Spannvorrichtung (22) vertikale Stifte (46) und Ausnehmungen (48) umfassen.

6. Verfahren gemäß irgendeinem der voranstehenden Ansprüche, wobei das Deckengerüst (10) eine Länge aufweist, die mehr als 1/4 der Länge der Dachstruktur (30) beträgt.

7. Verfahren gemäß irgendeinem der voranstehenden Ansprüche, wobei das Deckengerüst (10) eine Länge aufweist, die mehr als 1/3 der Länge der Dachstruktur (30) beträgt.

8. Verfahren gemäß irgendeinem der voranstehenden Ansprüche, wobei der Zusammenbau des Deckengerüsts (10) den Zusammenbau von Längs- und Querträgern (12, 14) umfasst.

9. Verfahren gemäß irgendeinem der voranstehenden Ansprüche, weiterhin umfassend das Bereitstellen des Deckengerüsts mit Teilen der Innenausrüstung (16, 18) vor dem auf dem Kopf stehenden Positionieren des Deckengerüsts (10) unterhalb der beweglichen Decken-Einspannung (22).

10. Verfahren gemäß irgendeinem der voranstehenden Ansprüche, weiterhin umfassend das Abdecken des Deckengerüsts mit Deckenplatten, nachdem die Decken-Einspannung (22) entfernt wurde.

## Revendications

1. Procédé d'assemblage d'une ossature de plafond (10) à une structure de toit (30) d'une carrosserie d'un véhicule ferroviaire, **caractérisé en ce qu'**il comprend les éléments suivants :
- l'assemblage d'une ossature de plafond (10) de la carrosserie du véhicule ;
- le positionnement d'une structure de toit (30) de la carrosserie du véhicule à l'envers sur un gabarit de toit (32), le gabarit de toit (32) étant muni d'un ensemble d'éléments de positionnement de toit (40) coopérant avec des éléments correspondants (36, 38) de la structure de toit (30) pour retenir la structure de toit (30) dans une position prédéterminée unique relativement au gabarit de toit (32), le gabarit de toit (32) ayant un ensemble d'éléments de positionnement supplémentaires (46) ;
- le positionnement de l'ossature de plafond (10) à l'envers sous un gabarit de plafond mobile (22), le gabarit de plafond (22) étant muni d'un ensemble d'éléments de positionnement de plafond (26, 24) coopérant avec des éléments correspondants (14, 20) de l'ossature de plafond (10) pour retenir l'ossature de plafond (10) dans une position prédéterminée unique par rapport au gabarit de plafond (22), le gabarit de plafond (22) ayant un ensemble d'éléments de positionnement supplémentaires (48) ;
- l'abaissement du gabarit de plafond (22) conjointement avec l'ossature de plafond (10) sur le gabarit de toit (32) et la structure de toit (30), de sorte que les éléments de positionnement supplémentaires (48) du gabarit de plafond (22) et les éléments de positionnement supplémentaires (46) du gabarit de toit (32) coïncident ;
- la fixation de l'ossature de plafond (10) à la structure de toit (30) ; et
- le détachement du gabarit de plafond (22) de l'ossature de plafond (30) et l'enlèvement du gabarit de plafond (22).

2. Procédé selon la revendication 1, dans lequel les éléments correspondants (36, 38) de la structure de toit (30) sont pourvus de trous traversants (38) situés en diverses positions le long des deux côtés de la structure de toit (30), le procédé comprenant en outre une étape ultérieure d'assemblage de la structure de toit (30) à une structure de paroi latérale de la carrosserie de véhicule, dans lequel les trous traversants (38) reçoivent les fixations pour fixer de manière permanente la structure de paroi latérale sur la structure de toit (30).

3. Procédé selon l'une quelconque des revendications précédentes, dans lequel les éléments de positionnement de toit (42) comprennent des axes ou des boulons qui s'étendent obliquement.

4. Procédé selon l'une quelconque des revendications précédentes, dans lequel la fixation de l'ossature de plafond (10) à la structure de toit (30) comprend le montage et la fixation de consoles réglables (50) à l'ossature de plafond (10) et à la structure de toit (30).

5. Procédé selon l'une quelconque des revendications précédentes, dans lequel les éléments de positionnement supplémentaires (46) du gabarit de toit (32) et du gabarit de plafond (22) comprennent des broches verticales (46) et des cavités (48).

6. Procédé selon l'une quelconque des revendications précédentes, dans lequel l'ossature de plafond (10) a une longueur qui est supérieure à 1/4 de la longueur de la structure de toit (30).

7. Procédé selon l'une quelconque des revendications précédentes, dans lequel l'ossature de plafond (10) a une longueur qui est supérieure à 1/3 de la longueur de la structure de toit (30).

8. Procédé selon l'une quelconque des revendications précédentes, dans lequel l'assemblage de l'ossature de plafond (10) comprend l'assemblage de poutres longitudinales et transversales (12, 14).

9. Procédé selon l'une quelconque des revendications précédentes, comprenant en outre le fait de munir l'ossature de plafond de pièces d'équipement intérieur (16, 18) avant de positionner l'ossature de plafond (10) à l'envers sous le gabarit de plafond mobile (22).

10. Procédé selon l'une quelconque des revendications précédentes, comprenant en outre le recouvrement de l'ossature de plafond avec des panneaux de plafond après que le gabarit de plafond (22) a été enlevé.
